# EUROPÄISCHE PATENTSCHRIFT

(11) **EP 2 824 669 B1**
(45) Veröffentlichungstag und Bekanntmachung des Hinweises auf die Patenterteilung: **30.08.2017**
(21) Anmeldenummer: 13175986.2
(22) Anmeldetag: 10.07.2013
(51) Int. Cl.: G21F 5/012, G21C 19/06, G21F 5/08, G21F 5/10, G21F 5/12

(54) **Brennstabköcher**
Fuel rod sleeve
Logement pour crayon combustible

(43) Veröffentlichungstag der Anmeldung: 14.01.2015
(73) Patentinhaber: GNS Gesellschaft für Nuklear-Service mbH, 45127 Essen (DE)
(72) Erfinder: Bannani, Amin, 40878 Ratingen (DE); Cebula, Wojciech, 42349 Wuppertal (DE); Hüggenberg, Roland, 44795 Bochum (DE); Kühl, Helmut, 52428 Jülich (DE)
(74) Vertreter: Rohmann, Michael

(56) Entgegenhaltungen:
- EP-A1- 0 978 849
- DE-A1- 3 306 970
- JP-A- 2002 243 888
- JP-A- 2004 144 600
- JP-A- 2011 033 499
- US-A- 3 845 315
- US-A- 4 310 034
- US-A- 4 572 959
- US-A- 4 894 550

## Beschreibung

Die Erfindung betrifft einen Brennstabköcher für Brennstäbe, vorzugsweise für beschädigte Brennstäbe.

Es ist grundsätzlich bekannt, abgebrannte Brennelemente zur Lagerung und/ oder zum Transport in mechanisch hochbelastbare Behälter einzubringen. Solche Transport- und/oder Lagerbehälter sind beispielsweise mit den Markennamen Castor® oder Constor® bezeichnet. Während des Betriebs eines Kernkraftwerks kann es vorkommen, dass Brennelemente beschädigt werden. Da insbesondere die mechanischen Eigenschaften eines beschädigten Brennelements nicht klar abgeschätzt werden können, ist das Einbringen eines beschädigten Brennelements in einen Transportbehälter und/oder Lagerbehälter kritisch. Beschädigte Brennelemente werden nach dem Entfernen aus dem Reaktor in einem Abklingbecken gelagert, wobei während der Lagerung Wasser in die Brennelemente bzw. in den Kernbrennstoff umgebenden Hüllrohre eindringen kann. Da bei der Lagerung eines solchen, beschädigten Brennelements in einem aus der Praxis bekannten Lagerbehälter und/oder Transportbehälter Wasser aus dem beschädigten Brennelement austreten kann, besteht die Gefahr, dass der Transport-/Lagerbehälter durch das aus den Brennelementen austretende Wasser und/oder der im Rahmen der Restradioaktivität gebildeten Substanzen durch Korrosion beschädigt wird. Beispielsweise aus DE 10 2005 043 857 A1 ist ein Brennstabköcher bekannt, der über mehrere Aufnahmerohre für beschädigte Brennstäbe verfügt. Es ist bekannt, durch Evakuieren der einzelnen Aufnahmerohre dieses Brennstabköchers, die defekten Brennstäbe für eine anschließende Lagerung zu trocknen (siehe beispielsweise EP0978849). Nach der Trocknung muss dieser Brennstabköcher verschlossen werden, wozu Metalldichtungen vorgesehen sind, die zwischen einer köcherseitigen Dichtfläche und einer deckelseitigen Dichtfläche angeordnet sind. Um die Dichtigkeit eines aus der Praxis bekannten Brennstabköchers zu gewährleisten, muss die Deckelplatte mit einem vorgegebenen, gleichmäßigen Druck gegen die Dichtung verspannt werden. Es ist jedoch bekannt, dass es bei einer langen Lagerzeit zu Relaxationseffekten in vorgespannten Schrauben kommen kann, so dass die Dichtigkeit des Verschlusses des Brennstabköchers nicht gewährleistet werden kann. Weiterhin ist bei den aus der Praxis bekannten Brennstabköchern die Fixierung der Aufnahmerohre für die beschädigten Brennstäbe kritisch, da diese Aufnahmerohre über ihre fußseitigen Endstopfen mit einer Fußplatte des Brennstabköchers fest verschweißt sind. Bei hohen mechanischen Belastungen des Brennstabköchers oder bei thermischen Längenänderungen der Aufnahmerohre werden diese Schweißnähte stark belastet, wodurch diese beschädigt werden können.

Der Erfindung liegt daher das technische Problem zugrunde, einen Brennstabköcher anzugeben, der sich durch eine hohe mechanische Beständigkeit eine zuverlässige Dichtigkeit, einen einfachen Aufbau, eine hohe Störfallsicherheit und eine flexible Anpassbarkeit an eine Vielzahl verschiedener, beschädigter Brennstäbe auszeichnet.

Zur Lösung des technischen Problems lehrt die Erfindung einen Brennstabköcher nach Anspruch 1. Grundsätzlich kann ein Brennstab, welcher Brennstab einem Brennelement entnommen ist, in das Aufnahmerohr für den Brennstab eingesetzt werden. Empfohlenermaßen ist einem Aufnahmerohr lediglich ein Brennstab zugeordnet. Bevorzugt ist der Brennstab ein Sonderbrennstab. Ein Sonderbrennstab ist beispielsweise ein bestrahlter oder unbestrahlter Kernbrennstoff in Form eines intakten oder defekten Brennstabs, eines Brennstababschnitts oder losen Brennstoffs vorzugsweise aus einem Druckwasserreaktor oder einem Siedewasserreaktor. Es ist möglich, dass ein Sonderbrennstab von Kapseln umschlossen oder in eine Handhabungshülse eingestellt ist. Die Umschließung durch die Kapsel und/oder die Handhabungshülse ist vorzugsweise aus Edelstahl und/oder einer Zirkoniumlegierung gefertigt. Gemäß einer Ausführungsform ist der Sonderbrennstab ein beschädigter Brennstab, der beispielsweise deformiert ist oder gebrochen. Es liegt im Rahmen der Erfindung, dass der Sonderbrennstab ein vorgeschädigter Brennstab ist, so dass der Sonderbrennstab nicht weiter in einem Reaktor einsetzbar ist. Vorzugsweise ist der Sonderbrennstab ein fluiddurchlässiger Brennstab, dessen Hüllrohr für fluide Medien durchlässig ist und/oder durch dessen Hüllrohr radioaktives Material austreten kann.

Zweckmäßigerweise weist der Brennstabköcher Abmessungen auf, die den Abmessungen eines einsatzfähigen bzw. unbeschädigten Brennelements entsprechen. Es liegt im Rahmen der Erfindung, dass der erfindungsgemäße Brennstabköcher in einem aus dem Stand der Technik bekannten Transportbehälter und/oder Lagerbehälter anstelle eines Brennelements einbringbar ist. Der erfindungsgemäße Brennstabköcher kann zur Lagerung und/oder zum Transport von Brennstäben, vorzugsweise von Sonderbrennstäben, verwendet werden. Der Brennstabköcher ist vorteilhafterweise als monolithischer, geschmiedeter, bevorzugt schweißnahtfreier Körper ausgebildet.

Vorzugsweise ist auf den mit dem Verschlusselement verschlossenen Köcherdeckel ein kopfseitiger Stoßdämpfer aufgesetzt, welcher Stoßdämpfer bevorzugt mit dem Brennstabköcher, zweckmäßigerweise mit dem Köchermantel, verschraubt ist. Empfohlenermaßen ist auf einer dem Innenraum abgewandten Oberfläche des Köcherbodens ein Stoßdämpfer an den Brennstabköcher vorzugsweise an den Köchermantel angeschlossen, bevorzugt aufgeschraubt. Eine Anlagefläche, mit der der Stoßdämpfer an dem Köcherboden anliegt, weist vorzugsweise eine und bevorzugt eine Mehrzahl von Wasserablaufnuten auf, mittels welchen Wasserablaufnuten Wasser von dem Brennstabköcher wegleitbar ist, wenn der Brennstabköcher beispielsweise aus einem Brennelementelagerbecken bzw. Abklingbecken (Lagerbecken) herausgezogen wird.

Vorzugsweise ist eine dem Innenraum abgewandete Oberfläche des Brennstabköchers mit beispielsweise eingefrästen Vertiefungen versehen, wobei die Vertiefungen umgebende Längsstege und Querstege als Auflageflächen beispielsweise beim Transport und/oder bei der Lagerung des Brennstabköchers ausgebildet sein können.

Gemäß einer bevorzugten Ausführungsform sind der Brennstabköcher und das Verschlusselement aus demselben Material gefertigt. Zweckmäßigerweise weisen das Material, aus welchem Material der Brennstabköcher und aus welchem Material das Verschlusselement gefertigt sind, die gleichen Wärmeausdehnungskoeffizienten auf. Auf diese Weise wird die Ausbildung von Spannungen aufgrund unterschiedlicher thermischer Ausdehnungskoeffizienten des Brennstabköchers und des Verschlusselements vermieden. Der Brennstabköcher und/oder das Verschlusselement bestehen jeweils aus einem Stahl, vorzugsweise einem Edelstahl. Besonders bevorzugt sind das Verschlusselement und/oder der Brennstabköcher aus einem gegenüber Halogeniden, insbesondere gegenüber Chlorid beständigen Edelstahl gefertigt, beispielsweise aus dem gemäß DIN 17440 als mit der Werkstoffnummer 1.4571 gekennzeichneten Stahl.

Vorteilhafterweise weist das Verschlusselement ein Halteelement auf, welches verschlusselementseitige Halteelemente mit einem deckelöffnungsseitigen, komplementären Halteelement zusammenwirkt und wobei das Verschlusselement mit dem Halteelement und dem komplementären Halteelement an dem Brennstabköcher sicherbar ist. Besonders bevorzugt ist das Halteelement als Gewinde und das komplementäre Halteelement als zu dem Gewinde komplementäres Gewinde ausgebildet. Gemäß einer Ausführungsform verfügt das Verschlusselement über ein Außengewinde, das mit einem in der Deckelöffnung angeordneten Innengewinde zusammenwirkt. Das Verschlusselement ist besonders bevorzugt als Schraubdeckel ausgebildet. Zweckmäßigerweise ist der Brennstabköcher mit dem Verschlusselement fluiddicht verschließbar.

Das Verschlusselement wird besonders bevorzugt ausschließlich bzw. im Wesentlichen mit dem Halteelement, vorzugsweise mit dem in das köcherdeckelseitige Innengewinde eingreifende Außengewinde in der Deckelöffnung gehalten. Mit anderen Worten ist das Verschlusselement nicht mit zusätzlichen Schrauben (schraubenverbindungsfrei) an dem Brennstabköcher, vorzugsweise an dem Köcherdeckel des Brennstabköchers, gesichert. Grundsätzlich ist es möglich, dass das Verschlusselement beispielsweise mittels eines Bajonettverschlusses an dem Brennstabköcher arretiert bzw. gesichert ist.

Vorzugsweise ist das Verschlusselement als kreisrunder Verschlussdeckel ausgebildet. Bevorzugt verfügt das Verschlusselement über einen Flansch bzw. Kragen, welcher Flansch bzw. Kragen zur Anlage an eine die Deckelöffnung umgebende Stirnfläche des Köcherdeckels bringbar ist, wenn das Verschlusselement in die Deckelöffnung eingesetzt, vorzugsweise eingeschraubt ist. Empfohlenermaßen liegt der vorzugsweise ringförmige Kragen bzw. Flansch fluiddicht bzw. gasdicht auf der Stirnfläche des Köcherdeckels auf, wenn das Verschlusselement in die Deckelöffnung eingesetzt, vorzugsweise eingeschraubt ist. Auf diese Weise wird sichergestellt, dass der mit dem Verschlusselement verschlossene Brennstabköcher den Brennstab bzw. den Sonderbrennstab fluiddicht, bevorzugt gasdicht umschließt.

Besonders bevorzugt ist das Verschlusselement auf der dem Innenraum abgewandten Stirnfläche des Köcherdeckels bzw. einer Außenseite des Köcherdeckels mit dem Köcherdeckel einstückig verbunden, vorzugsweise verschweißt. Zweckmäßigerweise ist der Flansch bzw. der Kragen des Verschlusselements mit dem Brennstabköcher und vorzugsweise mit dem Köcherdeckel verschweißt. Empfohlenermaßen ist das Material, aus welchem Material die Schweißnaht zur Verbindung des Verschlusselements mit dem Köcherdeckel besteht, aus dem gleichen bzw. demselben Material wie das Verschlusselement und/oder der Brennstabköcher gebildet. Die Auswahl identischer Materialien für das Verschlusselement, den Köcherdeckel und die Schweißnaht stellt sicher, dass zwischen den einzelnen Komponenten des Brennstabköchers keine die Korrosionsbeständigkeit beeinträchtigenden Potentialdifferenzen ausgebildet sind und dass z. B. im Falle thermischer Ausdehnungen des Brennstabköchers keine unkontrollierbaren Kräfte auf die Schweißnaht einwirken. In vorteilhafter Weise wird durch die Arretierung des Verschlusselements mit dem Halteelement an dem deckelöffnungsseitigen, komplementären Halteelement eine vor allem mechanisch stark belastbare Verbindung zwischen dem Verschlusselement und dem Brennstabköcher angegeben, so dass selbst im Falle starker mechanischer Belastungen des Brennstabköchers keine bzw. lediglich von der Schweißnaht aufnehmbare Kräfte auf die Schweißnaht einwirken. Zweckmäßigerweise werden Kräfte, die auf das Verschlusselement einwirken, durch das Halteelemente abgeleitet, so dass vorzugsweise die Schweißnaht lediglich elastisch beansprucht wird. Die Beanspruchung der Schweißnaht kann mechanisch und/oder thermo-mechanisch sein. Es liegt im Rahmen der Erfindung, dass die Schweißnaht als Dichtnaht ausgeführt ist, wobei die Schweißnaht besonders bevorzugt keine tragende bzw. kraftableitende Funktion ausübt.

Besonders bevorzugt ist das Verschlusselement, vorzugsweise abgesehen von der einstückigen, außenseitigen Verbindung mit dem Köcherdeckel, dichtungsfrei in der Deckelöffnung angeordnet, wenn der Brennstabköcher mit dem Verschlusselement fluiddicht verschlossen ist. Folglich zeichnet sich der erfindungsgemäße Brennstabköcher durch eine hohe Funktionssicherheit und vorteilhafte Wartungsarmut aus.

Es liegt im Rahmen der Erfindung, dass in dem Innenraum ein Aufnahmekorb angeordnet ist, wobei das Aufnahmerohr mit dem Aufnahmekorb verbunden ist. Zweckmäßigerweise ist das Aufnahmerohr lediglich mit dem Aufnahmekorb verbunden. Es hat sich bewährt, dass ein köcherbodenseitiges Ende des Aufnahmerohrs mit einem Verschluss verschlossen ist. Zweckmäßigerweise ist ein in dem Aufnahmerohr aufgenommener Brennstab bzw. Sonderbrennstab mit einem Blockierelement in dem Aufnahmerohr festsetzbar. Es empfiehlt sich, dass der Aufnahmekorb und/oder das Aufnahmerohr aus demselben Material wie der Brennstabköcher bzw. das Verschlusselement gefertigt sind. Es empfiehlt sich, dass der Aufnahmekorb und/oder das Aufnahmerohr jeweils aus einem gemäß DIN 17440 mit der Werkstoffnummer 1.4571 versehenen Edelstahl gefertigt sind.

Es empfiehlt sich, dass der Aufnahmekorb reversibel in dem Brennstabköcher festsetzbar ist. Der Aufnahmekorb ist im Rahmen der Erfindung an die in dem Brennstabköcher aufzunehmenden Brennstäbe bzw. Sonderbrennstäbe und an die Anzahl der aufzunehmenden Brennstäbe bzw. Sonderbrennstäbe anpassbar. In vorteilhafter Weise ist die Ausbildung des Aufnahmekorbs bzw. die Anzahl der in die Aufnahmerohre des Aufnahmekorbs einbringbaren Brennstäbe bzw. Sonderbrennstäbe unabhängig von der durch den erfindungsgemäßen Brennstabköcher angegebenen, dichten Umschließung des Aufnahmekorbes.

Besonders bevorzugt ist der Aufnahmekorb durch die Deckelöffnung in den Innenraum einbringbar bzw. aus dem Innenraum entfernbar. Vor Ausbildung einer dichten Umschließung des Aufnahmekorbs durch den Brennstabköcher ist der Aufnahmekorb zunächst durch die Deckelöffnung in den Innenraum des Brennstabköchers einzubringen, woraufhin das Verschlusselement in die Deckelöffnung eingesetzt, vorzugsweise eingedreht wird. Bevorzugt wird der zweckmäßigerweise ringförmige Kragen bzw. Flansch des Verschlusselementes mit dem Köcherdeckel verschweißt, wenn das Verschlusselement vollständig in die Deckelöffnung eingesetzt, vorzugsweise eingeschraubt ist. Auf diese Weise wird die dichte Umschließung des Aufnahmekorbs durch den Brennstabköcher angegeben. Eine Entfernung des Aufnahmekorbs aus dem Brennstabköcher erfolgt beispielsweise, indem die Schweißnaht zwischen dem Verschlusselement und dem Köcherdeckel aufgetrennt und dann das Verschlusselement unter Freigabe der Deckelöffnung entfernt wird. Der Aufnahmekorb ist dann durch die Deckelöffnung aus dem Innenraum im Rahmen der Erfindung entfernbar.

Es ist möglich, dass der Aufnahmekorb eine Kopfplatte und eine Fußplatte aufweist, wobei das Aufnahmerohr und bevorzugt eine Mehrzahl von Aufnahmerohren jeweils derart an die Kopfplatte angeschlossen ist, dass ein kopfplattenseitiges Ende jedes Aufnahmerohrs offen ausgebildet ist und wobei ein fußplattenseitiges Ende jedes Aufnahmerohrs verschlossen ausgebildet ist. Bevorzugt sind die Aufnahmerohre parallel bzw. im Wesentlichen parallel zueinander angeordnet. Gemäß einer Ausführungsform erfolgt eine räumliche Fixierung der Aufnahmerohre in dem Innenraum bzw. in dem Aufnahmekorb mittels Lochplatten, die die Aufnahmerohre in einstellbaren Abständen halten bzw. in ihren Lagen fixieren. Zweckmäßigerweise sind die Durchmesser der einzelnen Aufnahmerohre an die zu entsorgenden Brennstäbe bzw. Sonderbrennstäbe anpassbar. Erfindungsgemäss sind in dem Innenraum zumindest zwei Temperiermediumkanäle ausgebildet, wobei das Aufnahmerohr und vorzugsweise die Mehrzahl der in dem Innenraum angeordneten Aufnahmerohre in einem ersten Temperiermediumkanal angeordnet ist/sind, durch welchen ersten Temperiermediumkanal ein Temperiermedium in den Innenraum einleitbar ist und wobei durch einen zweiten Temperiermediumkanal das Temperiermedium aus dem Innenraum ausleitbar ist. Es empfiehlt sich, dass das Temperiermedium mit der Maßgabe durch den ersten Temperiermediumkanal in den Innenraum einleitbar ist, dass das Temperiermedium nach dem Eintritt in den Innenraum das Aufnahmerohr umströmt, wobei vorteilhafterweise die Wärme des Temperiermediums auf das Aufnahmerohr und den in dem Aufnahmerohr aufgenommenen Brennstab übertragen wird bzw. übertragbar ist.

Zweckmäßigerweise ist das Aufnahmerohr bzw. sind die Aufnahmerohre fluiddicht, insbesondere gasdicht ausgebildet, wobei ein köcherdeckelseitiges Ende der Aufnahmerohre jeweils offen und bevorzugt ein köcherbodenseitiges Ende der Aufnahmerohre jeweils verschlossen (fluiddicht) ausgebildet ist. Das Temperiermedium kann beispielsweise temperierte Luft und/oder temperierter Stickstoff sein. Zweckmäßigerweise ist das Temperiermedium mit der Maßgabe in dem ersten Temperiermediumkanal und/oder zweiten Temperiermediumkanal führbar, dass ein Eindringen des Temperiermediums in das Aufnahmerohr ausgeschlossen ist. Erfindungsgemäss ist der zweite Temperiermediumkanal zentriert in dem Brennstabköcher, bevorzugt in dem Aufnahmekorb angeordnet ist. Die Aufnahmerohre sind vorzugsweise radial außerhalb des zweiten Temperiermediumkanals angeordnet. Der zweite Temperiermediumkanal ist beispielsweise als ein Zentralrohr ausgebildet, das entlang einer Längsachse des beispielsweise zylinderförmigen Aufnahmekorbs verläuft. Gemäß einer Ausführungsform wird bei einer Trocknung eines in dem Aufnahmerohr aufgenommenen Brennstabs bzw. von in den Aufnahmerohren aufgenommenen Brennstäben das Temperiermedium deckelseitig mit der Maßgabe in den Innenraum des Brennstabköchers eingeführt, dass das Temperiermedium die Aufnahmerohre umströmt und an einem bodenseitigen Ende des Innenraums des Brennstabköchers umgelenkt und durch den zweiten Temperiermediumkanal aus dem Innenraum des Brennstabköchers ausgeleitet wird. Auf diese Weise ist eine Temperierung der in dem Aufnahmerohr bzw. den Aufnahmerohren befindlichen Brennstab bzw. befindlichen Brennstäbe bzw. Sonderbrennstäben möglich, ohne dass das Temperiermedium in Kontakt mit dem Brennstab bzw. mit den Brennstäben tritt. Empfohlenermaßen werden vorzugsweise bei der Trocknung die deckelseitigen, offenen Enden der Aufnahmerohre beispielsweise an eine Vakuumapparatur angeschlossen. Zweckmäßigerweise wird das Aufnahmerohr bzw. werden die Aufnahmerohre von dem Temperiermedium beim Trocknen nach dem sogenannten Gegenstromprinzip angeströmt, wobei das Temperiermedium das Aufnahmerohr bzw. die Aufnahmerohre entgegen der Strömungsrichtung der aus dem Aufnahmerohr bzw. aus den Aufnahmerohren abgesaugten Feuchtigkeit anströmt. Es ist möglich, dass das Aufnahmerohr bzw. die Aufnahmerohre jeweils zum Trocknen des in dem Aufnahmerohr aufgenommenen Brennstabs bzw. der in den Aufnahmerohren aufgenommenen Brennstäbe evakuiert werden, wobei eine Temperierung des Innenraums des Brennstabköchers erfolgt, indem das Temperiermedium eine dem Innenraum abgewandte Oberfläche es Brennstabköchers umströmt.

Es ist möglich, dass an dem Brennstabköcher und/oder an dem Aufnahmekorb zumindest eine Opferanode angeschlossen ist. Zweckmäßigerweise ist die Opferanode in dem Innenraum des Brennstabköchers angeordnet. Es empfiehlt sich, dass das Standardpotential der Opferanode geringer ist als das Standardpotential des Brennstabköchers und/oder Verschlusselements und/oder des Aufnahmekorbs. Vorzugweise ist die Opferanode aus einem Stahl, bevorzugt einem Edelstahl, gefertigt, wobei der Stahl ein Standardpotential von beispielsweise ≥ -0,4 V und vorzugsweise ≥ 0 V aufweist. Das Durchbruchpotential der Opferanode ist geringer als das Durchbruchpotential des Brennstabköchers und/oder des Verschlusselementes und/oder des Aufnahmekorbs. Durchbruchpotential meint insbesondere das elektromechanische Potential, bei welchem der transpassive Bereich beginnt und Lochfraß möglich ist. Die Opferanode ist beispielsweise als Opferplatte bzw. Fußplatte ausgebildet, die an einem köcherbodenseitigen Ende des Aufnahmekorbs an den Aufnahmekorb angeschlossen ist. Dadurch wird sichergestellt, dass der durch die Opferanode gewährte Korrosionsschutz für den gesamten Brennstabköcher wirkt. Beispielsweise ist die Opferplatte aus einem rostfreien Stahl gefertigt, beispielsweise aus einem rostfreien Stahl mit der Werkstoffnummer 1.4301 gemäß DIN 17440.

Gemäß einer Ausführungsform ist an den Brennstabköcher eine Manipuliervorrichtung angeschlossen, wobei durch Ergreifen der Manipuliervorrichtung der Brennstabköcher anhebbar und/oder verlagerbar ist. Besonders bevorzugt ist die Manipuliervorrichtung an den deckelseitigen Stoßdämpfer angeschlossen. Beispielsweise ist die Manipuliervorrichtung als eine Eingriffsöffnung für ein Hebewerkzeug ausgebildet.

Der Erfindung liegt die Erkenntnis zugrunde, dass sich der erfindungsgemäße Brennstabköcher durch eine besondere Robustheit auszeichnet. Zweckmäßigerweise ist der Brennstabköcher ein monolithisches Schmiedestück, das schweißverbindungsfrei ausgebildet ist. In vorteilhafter Weise ist der Brennstabköcher mit dem Verschlusselement unter Vermeidung belasteter Schweißnähte verschließbar. Weiterhin liegt der Erfindung die Erkenntnis zugrunde, dass durch die auf den Köcherdeckel und Köcherboden aufgeschraubten Stoßdämpfer hohe axiale Lasten aufnehmbar sind, so dass ein unfallsicherer Einschluss von insbesondere beschädigten Brennstäben in den erfindungsgemäßen Brennstabköcher problemlos möglich ist.

Weiterhin erlaubt der erfindungsgemäße Brennstabköcher ein wirkungsvolles Trocknen der in den Aufnahmerohren aufgenommenen Brennstäbe, so dass eine langfristige Lagerung unter Vermeidung von feuchtigkeitsbedingter Korrosion problemlos möglich ist. Das erfindungsgemäße Verschließen der Deckelöffnung mit dem Verschlusselement erlaubt zudem ein dichtungsfreies Verschließen des Brennstabköchers, wodurch eine zu befürchtende Undichtigkeit des Brennstabköchers bei einer langen Lagerung unter Umgehung von bei Schrauben bekannten Relaxationseffekten vermieden wird. Der in den Innenraum des Brennstabköchers einführbare Aufnahmekorb ist darüber hinaus problemlos an variable Mengen beschädigter Brennstäbe anpassbar, so dass ein Brennstabköcher für eine große Anzahl verschiedener Brennstabmengen durch eine einfache Modifikation des Aufnahmekorbs anpassbar ist. In vorteilhafter Weise eignet sich der erfindungsgemäße Brennstabköcher für die Lagerung und den Transport von beschädigten Brennstäben. Mit dem erfindungsgemäßen Brennstabköcher ist eine Entkopplung des dichten Umschließens der Brennstäbe und der Anordnung der einzelnen Brennstäbe in dem Innenraum des Brennstabköchers möglich, weswegen sich der erfindungsgemäße Brennstabköcher problemlos an variable Mengen aufzunehmender Brennstäbe anpassen lässt.

Nachfolgend wird die Erfindung anhand einer lediglich ein Ausführungsbeispiel darstellenden Zeichnung erläutert. Es zeigen schematisch:
- **Fig.1**: eine perspektivische Ansicht eines erfindungsgemäßen Brennstabköchers,
- **Fig.2a**: eine perspektivische Ansicht eines in dem erfindungsgemäßen Brennstabköcher gemäß Fig. 1 angeordneten Aufnahmekorb,
- **Fig. 2b**: eine Vergrößerung des Abschnitts B des Aufnahmekorbs gemäß Fig. 2a,
- **Fig. 2c**: eine perspektivische Unteransicht des Abschnitts C des Aufnahmekorbs gemäß Fig. 2a,
- **Fig.3**: den erfindungsgemäßen Brennstabköcher mit dem darin angeordneten Aufnahmekorb, wobei das Verschlusselement noch nicht in eine Deckelöffnung des Brennstabköchers eingesetzt ist und
- **Fig. 4**: den erfindungsgemäßen Brennstabköcher mit verschlossener Deckelöffnung.

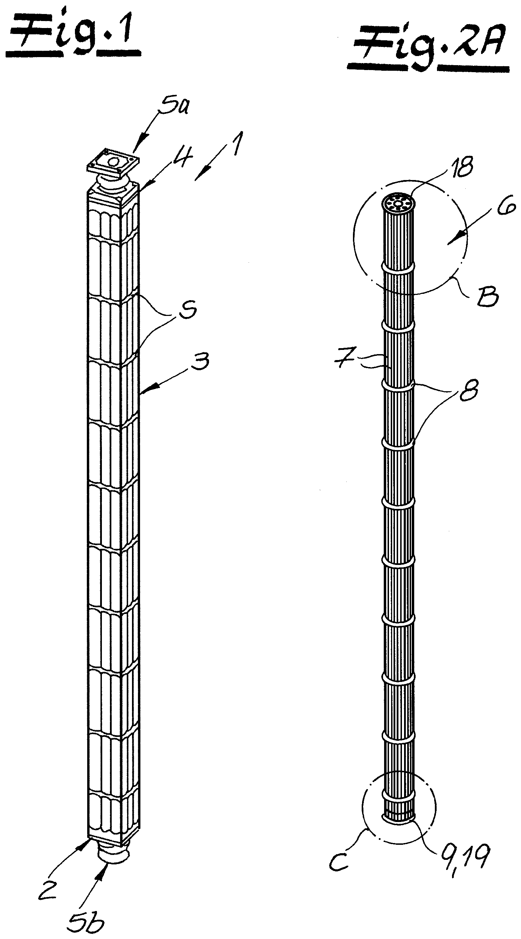

In Fig. 1 ist ein Brennstabköcher 1 mit einem Köcherboden 2, einem Köchermantel 3 und einem Köcherdeckel 4 dargestellt. Vorzugsweise und gemäß dem Ausführungsbeispiel ist der Brennstabköcher 1 als Quader ausgebildet. Der Köchermantel 3 weist Stege S auf, die gemäß dem Ausführungsbeispiel als Auflageflächen bei der Lagerung und/oder Transport des Brennstabköchers 1 dienen. Auf den Köcherdeckel 4 ist gemäß Fig. 1 ein Stoßdämpfer 5a aufgesetzt. Fußseitig bzw. auf den Köcherboden 2 ist ein Stoßdämpfer 5b aufgesetzt, so dass vorzugsweise und gemäß dem Ausführungsbeispiel eine Länge des Brennstabköchers 1 einschließlich der Stoßdämpfer 5a, 5b der Länge eines Brennelements entspricht.

In Fig. 1 ist nicht dargestellt, dass eine köcherbodenseitige Anlagefläche des Stoßdämpfers 5b Wasserablaufnuten aufweist, durch die Wasser ableitbar ist, wenn der stoßdämpferbewährte Brennstabköcher 1 aus einem Lagerbecken gezogen wird.

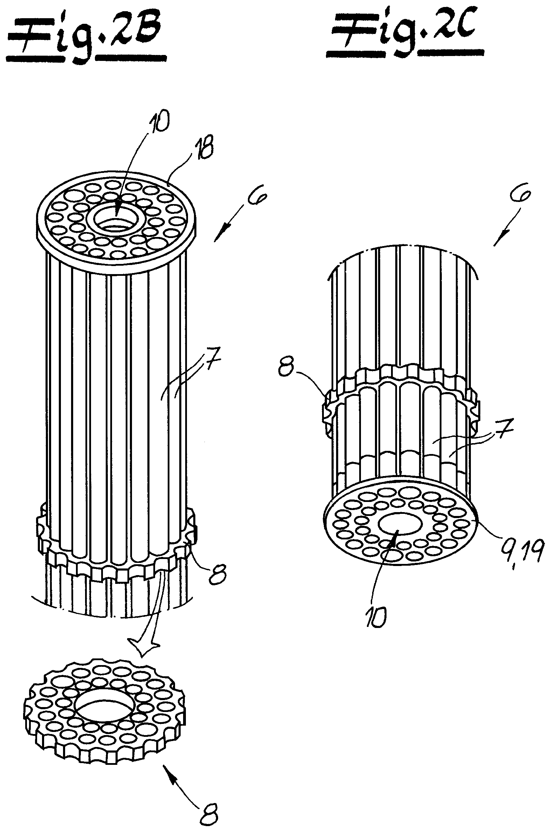

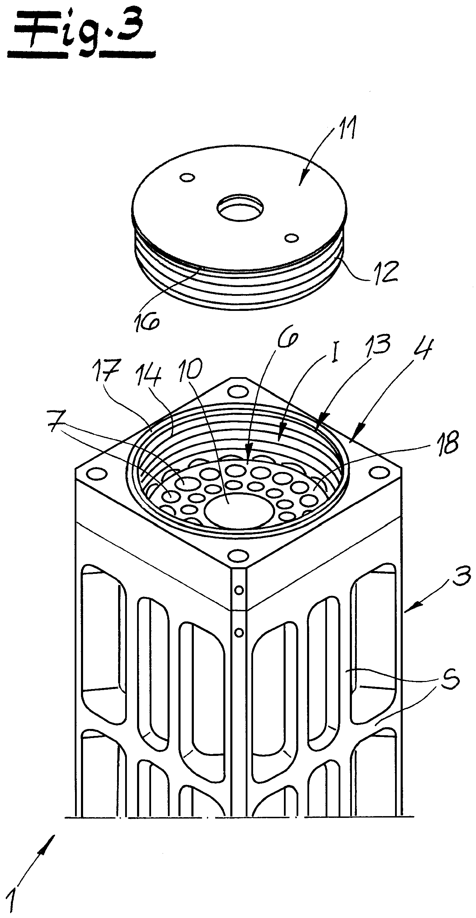

In Fig. 2a ist der Aufnahmekorb 6 dargestellt, der gemäß Fig. 3 in einem Innenraum I des Brennstabköchers 1 positionierbar ist. Vorzugsweise und gemäß dem Ausführungsbeispiel weist der Aufnahmekorb 6 eine Vielzahl von Aufnahmerohren 7 auf, wobei in einem Aufnahmerohr 7 jeweils ein nicht dargestellter Brennstab bzw. Sonderbrennstab aufnehmbar ist. In den Fig. 2b und 2c ist erkennbar, dass die einzelnen Aufnahmerohre 7 des Aufnahmekorbs 6 durch Lochplatten 8 geführt sind, so dass die Aufnahmerohre 7 beabstandet zueinander gehalten und parallel zueinander orientiert sind. Um den Aufnahmekorb 6 und den Brennstabköcher 1 vor Korrosion zu schützen, ist an dem Aufnahmekorb 6 eine als Opferplatte ausgebildete Opferanode 9 fixiert. Das Standardpotential der Opferanode 9 ist vorzugsweise und gemäß dem Ausführungsbeispiel geringer als die Standardpotentiale der in dem Brennstabköcher 1 bzw. dem Aufnahmekorb 6 eingesetzten Materialien. Weiterhin ist in Fig. 2a dargestellt, dass der Aufnahmekorb 7 über eine Kopfplatte 18 und die als Fußplatte 19 fungierende Opferanode verfügt. Vorzugsweise und gemäß dem Ausführungsbeispiel ist die Fußplatte 19 an einem köcherbodenseitigen Ende des Aufnahmekorbs 7 angeordnet, wenn der Aufnahmekorb 7 in den Innenraum I des Brennstabköchers 1 eingesetzt ist. Die Kopfplatte 18 ist gemäß Fig. 2a an einem köcherdeckelseitigen Ende des Brennstabköchers 1 an die Aufnahmerohre 7 angeschlossen.

Der Aufnahmekorb 6 ist mit der Maßgabe in den Innenraum I des Brennstabköchers 1 eingesetzt, dass zwischen dem Aufnahmekorb 6 und dem Brennstabköcher 1 ein erster Temperiermediumkanal ausgebildet ist, durch den ein Temperiermedium, die Aufnahmerohre 7 umströmend, in den Innenraum I des Brennstabköchers 1 einleitbar ist. In den Fig. 2a bis 2c und 3 ist erkennbar, dass in dem Aufnahmekorb 6 ein als Zentralrohr 10 ausgebildeter, zweiter Temperiermediumkanal vorgesehen ist, wobei sich das Zentralrohr 10 von einem köcherbodenseitigen Ende des Aufnahmekorbs 6 hin zu einem köcherdeckelseitigen Ende des Aufnahmekorbs 6 erstreckt. Das in den Innenraum I eingeleitete Temperiermedium wird vorzugsweise und gemäß dem Ausführungsbeispiel ausschließlich über das Zentralrohr 10 aus dem Innenraum I des Brennstabköchers 1 ausgeleitet.

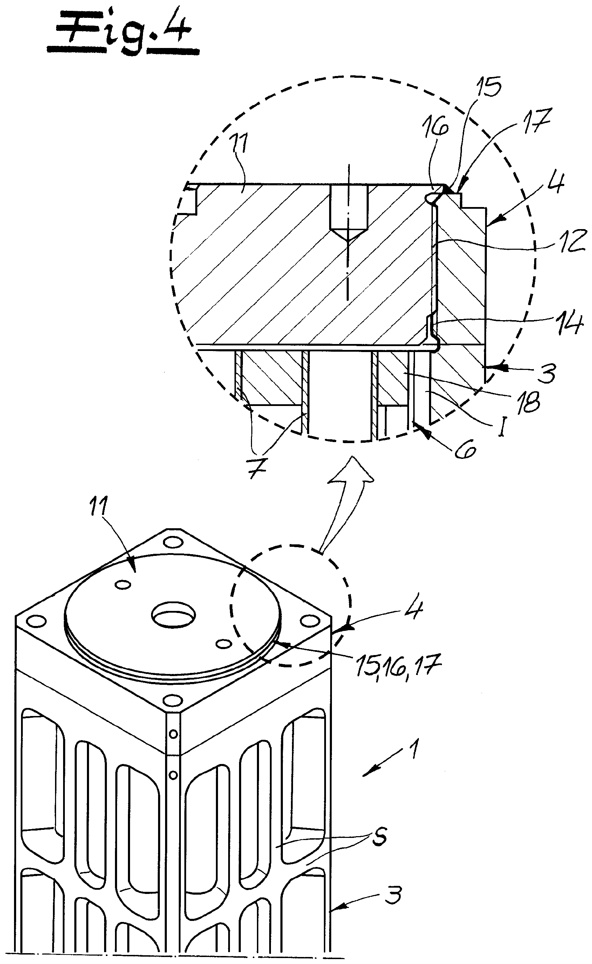

Fig. 3 zeigt einen köcherdeckelseitigen Abschnitt des Brennstabköchers, wobei ein als Schraubdeckel 11 ausgebildetes Verschlusselement mit einem Außengewinde 12 noch nicht in eine Deckelöffnung 13 des Köcherdeckels 4 eingesetzt ist. Die Deckelöffnung 13 weist ein zu dem Außengewinde 12 des Schraubdeckels 11 komplementäres Innengewinde 14 auf. In Fig. 4 ist dargestellt, dass der Schraubdeckel 11 in die Deckelöffnung 13 eingeschraubt ist. Fernerhin ist in Fig. 4 bzw. der Ausschnittsvergrößerung von Fig. 4 dargestellt, dass der Schraubdeckel 11 mit dem Köcherdeckel 4 mit einer Schweißnaht 15 verschweißt ist. Insbesondere in der Ausschnittsvergrößerung von Fig. 4 ist erkennbar, dass der Schraubdeckel 11 einen Flansch 16 aufweist, mit welchem Flansch 16 der in die Deckelöffnung 13 eingeschraubte Schraubdeckel 11 (Verschlussdeckel) auf einer dem Innenraum I abgewandten Stirnfläche 17 des Köcherdeckels 4 aufliegt. Vorzugsweise und gemäß dem Ausführungsbeispiel ist der Flansch 16 des Schraubdeckels 11 mit dem Köcherdeckel 4 verschweißt.

In den Fig. 1, 3 und 4 ist dargestellt, dass der Brennstabköcher 1 als geschmiedeter, einstückiger Brennstabköcher 1 ausgebildet ist. Vorzugsweise und gemäß dem Ausführungsbeispiel bestehen der Schraubdeckel 11 und die Schweißnaht 15 aus demselben Material wie der Brennstabköcher 1. Auf diese Weise werden Spannungen in dem Brennstabköcher 1 aufgrund mechanischen Belastungen und unterschiedlicher Wärmeausdehnungskoeffizienten des Brennstabköchers 1, des Schraubdeckels 11 und der Schweißnaht 15 vermieden. Gemäß dem Ausführungsbeispiel ist die Schweißnaht 15 als eine wartungsfreie und überwachungsfreie Verbindung zwischen dem Schraubdeckel 11 und dem Köcherdeckel 4 ausgebildet, mit der sich vorzugsweise und gemäß dem Ausführungsbeispiel eine Langzeitgasdichtheit des Brennstabköchers 1 sicherstellen lässt. Dass der Schraubdeckel 11 ohne Zwischenschaltung eines zusätzlichen Dichtelements bzw. Dichtungsrings den Innenraum I des Brennstabköchers 1 abdichtet, geht insbesondere aus Fig. 4 hervor. Im Falle einer Druckbelastung des Brennstabköchers 1 werden resultierende Kräfte durch den Stoßdämpfer 5a, den Schraubdeckel 11 und den Brennstabköcher 1 derart aufgenommen, dass die Schweißnaht 15 stets lastfrei ist.

## Patentansprüche

1. Brennstabköcher für Brennstäbe, insbesondere für beschädigte Brennstäbe, wobei der Brennstabköcher (1) mit einem von einem Köcherboden (2), einem Köchermantel (3) und einem Köcherdeckel (4) umschlossenen Innenraum (I) ausgebildet ist,
wobei der Köcherdeckel (4) eine mit einem Verschlusselement (11) verschließbare Köcherdeckelöffnung (13) aufweist, wobei der Brennstabköcher (1) Abmessungen aufweist, die den Abmessungen eines einsatzfähigen bzw. unbeschädigten Brennelementes entsprechen, so dass der Brennstabköcher in einem aus dem Stand der Technik bekannten Transportbehälter und/oder Lagerbehälter anstelle eines Brennelements einbringbar ist, wobei in dem Innenraum (I) zumindest ein Aufnahmerohr (7) für einen Brennstab angeordnet ist, welches Aufnahmerohr (7) an einem köcherbodenseitigen Ende fluiddicht verschlossen ist,
wobei das Verschlusselement (11) in die Deckelöffnung (13) einsetzbar ist, und **dadurch gekennzeichnet, dass** in dem Innenraum (I) zumindest zwei Temperiermediumkanäle ausgebildet sind, wobei das zumindest eine Aufnahmerohr (7) in einem ersten Temperiermediumkanal angeordnet ist, durch welchen ersten Temperiermediumkanal ein Temperiermedium in den Innenraum (I) einleitbar ist und wobei durch einen zweiten Temperiermediumkanal (10) das Temperiermedium aus dem Innenraum (I) ausleitbar ist und und dass der zweite Temperiermediumkanal (10) zentriert in dem Brennstabköcher (1) angeordnet ist.

2. Brennstabköcher nach Anspruch 1, wobei der Brennstabköcher (1) und das Verschlusselement (11) aus demselben Material gefertigt sind.

3. Brennstabköcher nach einem der Ansprüche 1 oder 2, wobei auf den mit dem Verschlusselement (11) verschlossenen Köcherdeckel (4) ein kopfseitiger Stoßdämpfer (5a) aufgesetzt ist, und wobei auf einer dem Innenraum abgewandeten Oberfläche des Köcherbodens (2) ein Stoßdämpfer (5b) an den Brennstabköcher, vorzugsweise an den Köchermantel (3), angeschlossen ist.

4. Brennstabköcher nach einem der Ansprüche 1 bis 3, wobei das Verschlusselement (11) ein Halteelement aufweist, welches verschlusselementseitige Halteelement mit einem deckelöffnungsseitigen, komplementären Halteelement zusammenwirkt und wobei das Verschlusselement (11) mit dem Halteelement und dem komplementären Halteelement an dem Brennstabköcher (1) sicherbar ist.

5. Brennstabköcher nach Anspruch 4, wobei das Halteelement als Gewinde (12) und das komplementäre Halteelement als zu dem Gewinde (12) komplementäres Gewinde (14) ausgebildet ist.

6. Brennstabköcher nach einem der Ansprüche 1 bis 5, wobei das Verschlusselement (11) auf einer dem Innenraum (I) abgewandten Stirnfläche (17) des Köcherdeckels (4) bzw. auf einer Außenseite des Köcherdeckels (4) mit dem Köcherdeckel (4) einstückig verbunden, vorzugsweise verschweißt ist.

7. Brennstabköcher nach einem der Ansprüche 1 bis 6, wobei das Verschlusselement (11) abgesehen von einer einstückigen, außenseitigen Verbindung mit dem Köcherdeckel (4) dichtungsfrei in der Deckelöffnung (13) angeordnet ist, wenn der Brennstabköcher (1) mit dem Verschlusselement (11) fluiddicht verschlossen ist.

8. Brennstabköcher nach einem der Ansprüche 1 bis 7, wobei in dem Innenraum (I) ein Aufnahmekorb (6) angeordnet ist, wobei das Aufnahmerohr (7) mit dem Aufnahmekorb (6) verbunden ist.

9. Brennstabköcher nach Anspruch 8, wobei der Aufnahmekorb (6) reversibel in dem Brennstabköcher (1) festsetzbar ist.

10. Brennstabköcher nach einem der Ansprüche 8 oder 9, wobei der Aufnahmekorb (6) durch die Deckelöffnung (13) in den Innenraum (I) einbringbar bzw. aus dem Innenraum (I) entfernbar ist.

11. Brennstabköcher nach einem der Ansprüche 8 bis 10, wobei der Aufnahmekorb (6) eine Kopfplatte (18) und eine Fußplatte (19) aufweist, wobei das Aufnahmerohr (7) und bevorzugt eine Mehrzahl von Aufnahmerohren (7) jeweils derart an die Kopfplatte (18) angeschlossen ist, dass ein kopfplattenseitiges Ende jedes Aufnahmerohrs (7) offen ausgebildet ist und wobei jedes fußplattenseitige Ende jedes Aufnahmerohrs (7) verschlossen ausgebildet ist, wobei jedes Aufnahmerohr (7) in dem ersten Temperiermediumkanal angeordnet ist.

12. Brennstabköcher nach einem der Ansprüche 9 bis 11, wobei der zweite Temperiermediumkanal (10) zentriert in dem Aufnahmekorb (6), angeordnet ist.

13. Brennstabköcher nach einem der Ansprüche 1 bis 12, wobei an dem Brennstabköcher (1) und/oder dem Aufnahmekorb (6) zumindest eine Opferanode (9) angeschlossen ist.

## Claims

1. A fuel rod quiver for fuel rods, in particular for damaged fuel rods, wherein the fuel rod quiver (1) is embodied with an interior (I), which is enclosed by a quiver bottom (2), a quiver jacket (3) and a quiver cover (4),
wherein the quiver cover (4) has a quiver cover opening (13), which can be closed by means of a closure element (11), wherein the fuel rod quiver (1) has dimensions, which correspond to the dimensions of an operational or undamaged fuel element, respectively,
so that the fuel rod quiver can be introduced into a transport container and/or storage container, which is known from the prior art, instead of a fuel element, wherein at least one accommodating pipe (7) for a fuel rod is arranged in the interior (I), which accommodating pipe (7) is closed in a fluid-tight manner on an end on the quiver bottom side,
wherein the closure element (11) can be inserted into the cover opening (13),
and **characterized in that**
at least two temperature control medium ducts are embodied in the interior (I), wherein the at least one accommodating pipe (7) is arranged in a first temperature control medium duct, through which first temperature control medium duct a temperature control medium can be introduced into the interior (I), and wherein the temperature control medium can be discharged from the interior (I) through a second temperature control medium duct (10) and
and that the second temperature control medium duct (10) is arranged so as to be centered in the fuel rod quiver (1).

2. The fuel rod quiver according to claim 1, wherein the fuel rod quiver (1) and the closure element (11) are made of the same material.

3. The fuel rod quiver according to one of claims 1 or 2,
wherein a head-side shock absorber (5a) is attached to the quiver cover (4), which is closed by means of the closure element (11), and wherein a shock absorber (5b) is connected to the fuel rod quiver, preferably to the quiver jacket (3), on a surface of the quiver bottom (2), which faces away from the interior.

4. The fuel rod quiver according to one of claims 1 to 3,
wherein the closure element (11) has a retaining element, which retaining element on the closure element side cooperates with a complementary retaining element on the cover opening side, and wherein the closure element (11) can be secured to the fuel rod quiver (1) by means of the retaining element and the complementary retaining element.

5. The fuel rod quiver according claim 4, wherein the retaining element is embodied as thread (12) and the complementary retaining element as thread (14), which is complementary to the thread (12).

6. The fuel rod quiver according to one of claims 1 to 5,
wherein the closure element (11) is connected, preferably welded, to the quiver cover (4) in one piece on the front surface (17) of the quiver cover (4), which faces away from the interior (I), or an outer side of the quiver cover (4), respectively.

7. The fuel rod quiver according to one of claims 1 to 6,
wherein, apart from a one-piece, external connection to the quiver cover (4), the closure element (11) is arranged in the cover opening (13) in a sealing-free manner, when the fuel rod quiver (1) is closed in a fluid-tight manner by means of the closure element (11).

8. The fuel rod quiver according to one of claims 1 to 7,
wherein an accommodating basket (6) is arranged in the interior (I), wherein the accommodating pipe (7) is connected to the accommodating basket (6).

9. The fuel rod quiver according to claim 8, wherein the accommodating basket (6) can be fixed in the fuel rod quiver (1) in a reversible manner.

10. The fuel rod quiver according to one of claims 8 or 9,
wherein the accommodating basket (6) can be introduced into the interior (I) or can be removed from the interior (I), respectively, through the cover opening (13).

11. The fuel rod quiver according to one of claims 8 to 10, wherein the accommodating basket (6) has a top plate (18) and a base plate (19), wherein the accommodating pipe (7) and preferably a plurality of accommodating pipes (7) are in each case connected to the top plate (18) in such a way that an end of each accommodating pipe (7) on the top plate side is embodied so as to be open, and wherein an end of each accommodating pipe (7) on the base plate side is embodied so as to be closed, wherein each accommodating pipe (7) is arranged in the first temperature control medium duct.

12. The fuel rod quiver according to one of claims 9 to 11, wherein the second temperature control medium duct (10) is arranged so as to be centered in the accommodating basket (6).

13. The fuel rod quiver according to one of claims 1 to 12, wherein at least one sacrificial anode (9) is connected to the fuel rod quiver (1) and/or to the accommodating basket (6).

## Revendications

1. Étui pour crayon combustible pour des crayons combustibles, notamment des crayons combustibles endommagés, l'étui pour crayon combustible (1) étant formé avec un espace intérieur (I) entouré par un fond d'étui (2), une enveloppe d'étui (3) et un couvercle d'étui (4),
le couvercle d'étui (4) comportant un orifice (13) de couvercle d'étui pouvant se fermer par un élément de fermeture (11), l'étui pour crayon combustible (1) présentant des dimensions qui correspondent aux dimensions d'un crayon combustible apte à l'utilisation ou non endommagé, de sorte que l'étui pour crayon combustible puisse s'introduire, à la place d'un crayon combustible dans un conteneur de transport et/ou un conteneur de stockage connu par l'art antérieur,
dans l'espace intérieur (I) étant placé au moins un tube récepteur (7) pour un crayon combustible, lequel tube récepteur (7) est fermé de manière étanche aux fluides sur une extrémité, du côté fond d'étui,
l'élément de fermeture (11) étant insérable dans l'orifice de couvercle (13),
et **caractérisé en ce que**
dans l'espace intérieur (I) sont conçus au moins deux canaux pour agent thermorégulateur, l'au moins un tube récepteur (7) étant placé dans un premier canal pour agent thermorégulateur, à travers lequel canal pour agent thermorégulateur, un agent thermorégulateur peut être introduit dans l'espace intérieur (I) et à travers un deuxième canal pour agent thermorégulateur (10), l'agent thermorégulateur pouvant être évacué hors de l'espace intérieur (I) et
et **en ce que** le deuxième canal pour agent thermorégulateur (10) est placé en étant centré dans l'étui pour crayon combustible (1).

2. Étui pour crayon combustible selon la revendication 1, l'étui pour crayon combustible (1) et l'élément de fermeture (11) étant fabriqués dans la même matière.

3. Étui pour crayon combustible selon l'une quelconque des revendications 1 ou 2, sur le couvercle d'étui (4) fermé par l'élément de fermeture (11) étant emboîté un amortisseur de chocs (5a) côté tête et sur une surface du fond d'étui (2) qui est opposée à l'espace intérieur, un amortisseur de chocs (5b) étant raccordé sur l'étui pour crayon combustible, de préférence sur l'enveloppe d'étui (3).

4. Étui pour crayon combustible selon l'une quelconque des revendications 1 à 3, l'élément de fermeture (11) comportant un élément de retenue, lequel élément de retenue du côté élément de fermeture interagissant avec un élément de retenue complémentaire, du côté orifice de couvercle et l'élément de fermeture (11) pouvant être bloqué avec l'élément de retenue et l'élément de retenue complémentaire sur l'étui pour crayon combustible (1).

5. Étui pour crayon combustible selon la revendication 4, l'élément de retenue étant conçu en tant que filetage (12) et l'élément de retenue complémentaire étant conçu en tant que taraudage (14) complémentaire au filetage (12).

6. Étui pour crayon combustible selon l'une quelconque des revendications 1 à 5, sur une surface frontale (17) du couvercle d'étui (4) qui est opposée à l'espace intérieur (I) ou sur une face extérieure du couvercle d'étui (4), l'élément de fermeture (11) étant assemblé en monobloc, de préférence soudé avec le couvercle d'étui (4).

7. Étui pour crayon combustible selon l'une quelconque des revendications 1 à 6, à l'exception d'un assemblage extérieur en monobloc avec le couvercle d'étui (4), l'élément de fermeture (11) étant placé sans joint dans l'orifice de couvercle (13) lorsque l'étui pour crayon combustible (1) est fermé de manière étanche aux fluides par l'élément de fermeture (11).

8. Étui pour crayon combustible selon l'une quelconque des revendications 1 à 7, dans l'espace intérieur (I) étant placé un panier récepteur (6), le tube récepteur (7) étant assemblé avec le panier récepteur (6).

9. Étui pour crayon combustible selon la revendication 8, le panier récepteur (6) pouvant être immobilisé de manière réversible dans l'étui pour crayon combustible (1).

10. Étui pour crayon combustible selon l'une quelconque des revendications 8 ou 9, le panier récepteur (6) pouvant être introduit dans l'espace intérieur (I) ou retiré de l'espace intérieur (I) à travers l'orifice du couvercle (13).

11. Étui pour crayon combustible selon l'une quelconque des revendications 8 à 10, le panier récepteur (6) comportant une plaque de tête (18) et une plaque de base (19), le tube récepteur (7) et de préférence une pluralité de tubes récepteurs (7) étant raccordés chacun sur la plaque de tête (18), de sorte qu'une extrémité du côté plaque de tête de chaque tube récepteur (7) soit conçue en étant ouverte et chaque extrémité côté plaque de base de chaque tube récepteur (7) étant conçue en étant fermée, chaque tube récepteur (7) étant placé dans le premier canal pour agent thermorégulateur.

12. Étui pour crayon combustible selon l'une quelconque des revendications 9 à 11, le deuxième canal pour agent thermorégulateur (10) étant placé en étant centré dans le panier récepteur (6).

13. Étui pour crayon combustible selon l'une quelconque des revendications 1 à 12, sur l'étui pour crayon combustible (1) et/ou le panier récepteur (6) étant raccordée au moins une anode sacrificielle (9).
